# NOUVEAU FASCICULE DE BREVET EUROPEEN

(11) **EP 0 553 004 B2**
(45) Date de publication et mention de la décision concernant l'opposition: **11.12.2002**
(45) Mention de la délivrance du brevet: 26.03.1997
(21) Numéro de dépôt: 93400079.5
(22) Date de dépôt: 14.01.1993
(51) Int. Cl.: G01N 21/89, G01N 21/84

(54) **Dispositif de mesure des proprietés de réflexion d'un substrat transparent notamment en verre pourvu d'une couche partiellement réfléchissante**
Vorrichtung zum Messen der Reflexionseigenschaften eines transparenten Substrats, insbesondere Glas, mit einer teilreflektierenden Beschichtung
Device for measuring the reflection properties of a transparent substrate, especially glass, with a partially reflecting layer

(30) Priorité: 18.01.1992 DE 4201274
(43) Date de publication de la demande: 28.07.1993
(73) Titulaire: SAINT GOBAIN GLASS FRANCE, 92400 Courbevoie (FR); VEGLA Vereinigte Glaswerke GmbH, 52066 Aachen (DE)
(72) Inventeur: Hoheisel, Hans-Peter, W-5060 Berg. Gladbach 1 (DE); Wirtz, Helmut, W-5100 Aachen (DE); Wilde, Ekkehard, W-5060 Bergisch-Gladbach 1 (DE)
(74) Mandataire: Breton, Jean-Claude

(56) Documents cités:
- EP-A- 0 119 630
- EP-A- 0 404 282
- WO-A-88/04402
- DE-A- 3 806 382
- GB-A- 2 064 111

## Description

La présente invention concerne un dispositif de mesure des propriétés de réflexion d'une couche partiellement réfléchissante déposée sur un substrat transparent notamment en verre.

Lorsqu'ils sont employés dans le secteur du bâtiment, les substrats transparents notamment en verre sont pourvus à grande échelle, sur une face, d'une couche partiellement réfléchissante. Ces couches peuvent être constituées de couches d'oxydes métalliques appliquées par pyrolyse, par exemple en continu, sur le ruban de verre flotté à la fin d'une chaîne de production de verre flotté. En variante, il peut s'agir de couches ou de systèmes de couches qui sont déposés dans un processus sous vide, par exemple par le procédé de pulvérisation cathodique réactive dans un champ magnétique.

Des substrats transparents notamment en verre revêtus sont fréquemment combinés avec un substrat transparent non revêtu pour former des vitrages isolants. Dans ce cas, la surface revêtue est en règle générale tournée vers l'espace d'air intermédiaire. Selon le domaine d'application d'un tel vitrage isolant constitué d'un substrat transparent notamment en verre revêtu et d'un substrat transparent notamment en verre non revêtu, la couche peut être appliquée sur le substrat transparent tourné vers l'extérieur ou sur le substrat transparent tourné vers l'espace intérieur. Lorsque les vitrages isolants doivent par exemple en premier ressort servir de vitrages solaires, la couche partiellement réfléchissante est déposée sur la face du substrat transparent extérieur tourné vers l'espace d'air intermédiaire. Par ailleurs, lorsque le vitrage isolant doit en premier ressort servir de vitrage isolant thermique à haute valeur k, la couche partiellement réfléchissante est appliquée sur la face du substrat transparent intérieur tournée vers l'espace d'air intermédiaire.

Un des critères importants pour un vitrage doté d'une couche partiellement réfléchissante et, ainsi, pour la conduite du processus de revêtement, est l'effet de couleur du vitrage en lumière réfléchie. Pour garantir un effet de couleur constant, on procède, directement après la réalisation de l'opération de revêtement, à une mesure de contrôle au cours de laquelle on envoie de la lumière diffuse à l'aide d'une tête de mesure appropriée et on analyse la lumière réfléchie. Cependant, comme l'effet de couleur est non seulement déterminé par la couche elle-même, mais dépend également de la surface d'un vitrage sur laquelle la couche partiellement réfléchissante est appliquée, on doit tenir compte, pour mesurer la couleur, de la position de la couche partiellement réfléchissante par rapport à l'ensemble du vitrage. Cela signifie que la mesure de contrôle de la couleur devra être effectuée d'un côté ou de l'autre, selon le domaine d'application du vitrage revêtu, et éventuellement en intercalant un autre substrat transparent pour pouvoir obtenir des indications représentatives au sujet de l'effet de couleur de la couche.

Etant donné que la couche, de par le procédé de fabrication même qui impose une position horizontale du substrat transparent, se trouve, en règle générale, sur la surface supérieure du substrat, il est nécessaire dans certains cas de procéder à une mesure de la couleur sur la surface inférieure du substrat. Cela se traduit par des frais supplémentaires dus aux conditions difficiles dans lesquelles la mesure de contrôle est effectuée.

De la demande de brevet internationale WO 88/04402, il est connu d'effectuer une détermination en ligne de l'évaluation colorimétrique d'une couche déposée sur un substrat. Néanmoins, cette mesure n'a pas pour but de réaliser des mesures dans les conditions d'utilisation du substrat qui correspondent par exemple à son utilisation dans un vitrage isolant.

L'invention a pour but de procurer un dispositif pratique susceptible d'être utilisé sur une chaîne de revêtement, qui permette d'effectuer, sans supplément de main-d'oeuvre ou de temps, l'évaluation colorimétrique de la couche partiellement réfléchissante dans les diverses conditions correspondant au domaine d'application en question du substrat transparent revêtu.

Selon l'invention, le dispositif de mesure des propriétés de réflexion d'une couche partiellement réfléchissante déposée sur un substrat transparent, notamment en verre, tel que dans un transporteur acheminant le substrat transparent revêtu, d'un côté de ce substrat, est prévu un rail chevauchant le substrat sur lequel peut se déplacer un chariot portant une tête de mesure qui reçoit un signal lumineux réfléchi pour mesurer la couleur de la lumière réfléchie, est caractérisé en ce que de l'autre côté du substrat est prévu un autre rail chevauchant le substrat sur lequel peut se déplacer un autre chariot portant une tête de mesure qui reçoit un signal lumineux réfléchi pour mesurer la couleur de la lumière réfléchie, les deux têtes de mesure pouvant être activées séparément ou conjointement, et les deux chariots portant respectivement les deux têtes de mesure pouvant être déplacés en synchronisme, et en ce que sur le chariot portant la tête de mesure tournée vers la couche est monté, avec un espace d'air (A) par rapport au substrat transparent, notamment en verre, revêtu et parallèlement à celui-ci, un substrat transparent non revêtu qui se trouve dans la trajectoire du rayon de mesure de la tête de mesure tournée vers la couche et qui est prolongé dans une mesure suffisante en direction de l'axe optique de l'autre tête de mesure pour que le rayonnement issu de cette tête de mesure frappe ce substrat.

A l'aide du dispositif selon l'invention, qui est monté par exemple sur un transporteur à rouleaux horizontal, on peut procéder de manière tout à fait automatique à la mesure de la couleur transversalement sur toute la surface du substrat transparent, tant au-dessus qu'en dessous de celle-ci et ce, au choix, soit de l'un ou de l'autre côté, soit éventuellement simultanément des deux côtés.

Un développement avantageux du dispositif selon l'invention réside dans le fait que, sur le chariot portant la tête de mesure tournée vers la couche, est monté, avec un espace d'air par rapport au substrat transparent revêtu, un substrat transparent non revêtu qui se trouve dans la trajectoire du rayon de mesure de la tête de mesure. Ce substrat transparent couplé à la tête de mesure supérieure représente le substrat transparent non revêtu d'un vitrage isolant si bien que, de cette manière, on peut également mesurer directement l'effet de couleur d'un vitrage isolant comportant le substrat transparent revêtu.

Selon un autre développement avantageux du dispositif selon l'invention, les deux têtes de mesure sont décalées l'une de l'autre de telle sorte que les résultats d'une mesure ne soient pas influencés par la réflexion du rayon de mesure sur la tête de mesure respectivement opposée.

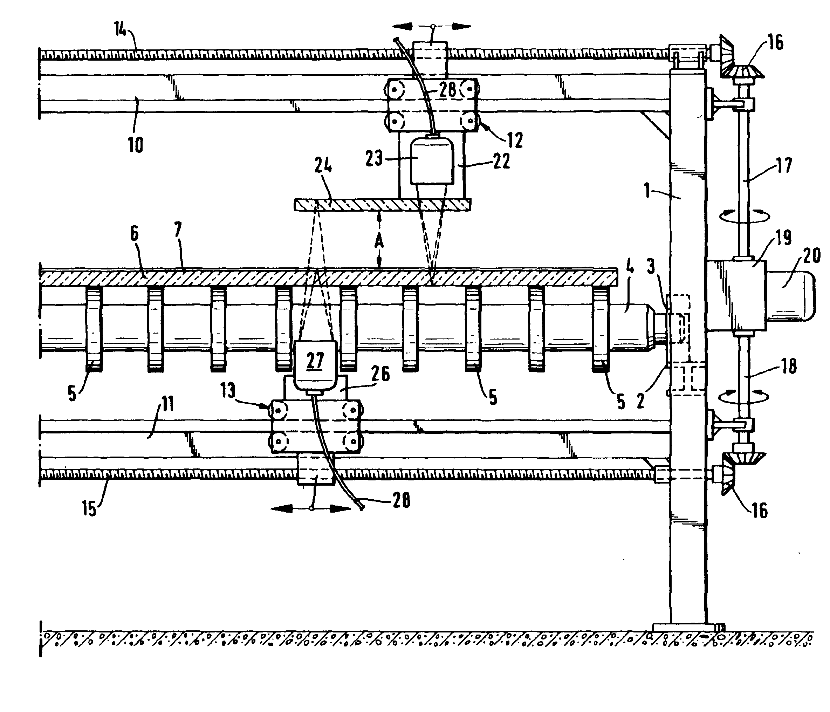

D'autres particularités et avantages de l'invention ressortiront des sous-revendications ainsi que de la description suivante d'un exemple de réalisation de l'invention donné en référence au dessin annexé qui est une vue en coupe verticale perpendiculairement à travers un transporteur à rouleaux, sur lequel le dispositif selon l'invention est installé.

Le transporteur à rouleaux comprend des montants verticaux 1 et des supports horizontaux 2 sur lesquels sont montés des paliers 3 pour les arbres de transport 4. Sur les arbres de transport 4 sont disposées à intervalles des bagues 5 faites d'une matière élastique, sur lesquelles les substrats transparents 6 sont posés et sont acheminés par friction. Les arbres de transport 4 sont mus en rotation par un mécanisme d'entraînement commun, non représenté, pour transporter les substrats transparents.

Le substrat transparent à examiner 6 est pourvu, sur sa face supérieure, d'une couche partiellement réfléchissante 7. La couche 7 est constituée en particulier d'une couche multiple appliquée par pulvérisation cathodique dans un champ magnétique et présentant, par exemple, la structure de base oxyde métallique-argent-métal-oxyde métallique.

Perpendicualirement à la piste de transport du transporteur à rouleaux, c'est-à-dire parallèlement aux arbres de transport 4, au-dessus et en dessous du plan de transport, est chaque fois disposé un rail 10, 11. Sur le rail supérieur 10 est monté un chariot 12 qui peut se déplacer le long du rail 10. De manière correspondante, sur le rail inférieur 11 est monté un chariot 13 qui peut se déplacer en travers de la piste de transport. Le chariot 12 est mis en mouvement par une tige filetée 14 ou par une courroie dentée et le chariot inférieur 13 l'est de manière correspondante par une tige filetée 15 ou une courroie dentée. Les tiges filetées 14 et 15 sont pour leur part mises en rotation par l'intermédiaire des engrenages coniques 16, des arbres 17, 18, d'une boîte d'engrenages 19 et d'un moteur électrique 20. La boîte d'engrenages 19 est conçue pour que les arbres 17, 18 et, dès lors, les chariots 12 et 13, puissent être entraînés via les tiges filetées 14 et 15 ou les courroies dentées, individuellement ou conjointement et en synchronisme.

Le chariot supérieur 12 est pourvu d'un support 22 qui porte une tête de mesure 23. De même, sur le support 22 est fixée un substrat transparent 24, en alignement parallèle avec le substrat 6, à une distance A de celui-ci qui correspond à l'espace d'air intermédiaire d'un vitrage isolant. Le substrat transparent 24 ne porte pas de revêtement superficiel et correspond au substrat transparent non revêtu d'un vitrage isolant.

Le chariot inférieur 13 porte également, par l'intermédiaire d'un support 26, une tête de mesure 27, qui correspond à la tête de mesure 23 en ce qui concerne sa structure et son mode de fonctionnement. L'axe optique des deux têtes de mesure 23 et 27 est perpendiculaire au substrat transparent 6. Les deux têtes de mesure 23 et 27 sont disposées avec un certain décalage latéral l'une par rapport à l'autre de telle sorte que la lumière chaque fois émise par une tête de mesure et captée à nouveau après réflexion ne soit pas perturbée par la tête de mesure qui lui est opposée. En conséquence, le substrat transparent 24 monté sur le support 22 du chariot supérieur 12 est prolongé en direction de l'axe optique de la tête de mesure inférieure 27 dans une mesure suffisante pour que le rayonnement issu de la tête de mesure 27 frappe ce substrat 24.

Les têtes de mesure 23 et 27 peuvent comprendre en principe n'importe quelle tête de mesure appropriée qui soit à même d'envoyer de la lumière diffuse sur le substrat et de capter la fraction réfléchie. Des têtes de mesure convenant à cet effet sont par exemple offertes par la société DATACOLOR. La lumière réfléchie par le substrat transparent et captée par la tête de mesure respective 23, 27 est acheminée respectivement via un câble de fibres optiques 28 à une unité d'évaluation correspondante, à savoir un spectromètre.

En fonction du type de vitrage isolant pour lequel le substrat transparent revêtu 6 est prévu, on activera soit la tête de mesure 23 se trouvant au-dessus du substrat transparent 6, soit la tête de mesure 27 se trouvant en dessous du substrat 6. C'est ainsi que l'activation de la tête de mesure supérieure 23 correspond au cas où le substrat transparent 6 doit être converti en un vitrage isolant doté de propriétés d'isolation thermique, tandis que l'activation de la tête de mesure inférieure 27 correspond au cas où le substrat transparent 6 doit être converti en un vitrage solaire. Bien entendu, on peut activer de la même façon les deux têtes de mesure simultanément ou l'une après l'autre de telle sorte que l'on puisse détecter les valeurs colorimétriques correspondantes pour les deux cas d'application.

Les mesures sont prises sous la commande d'un programme au cours d'une brève interruption du déplacement transversal des chariots, c'est-à-dire au cours d'un bref arrêt des têtes de mesure. Le nombre de mesures ainsi que l'emplacement des mesures peuvent être librement choisis. Les signaux évalués dans le spectromètre respectif sont visualisés sur un écran vidéo et sont reproduits par une imprimante.

## Revendications

1. Dispositif de mesure des propriétés de réflexion d'une couche partiellement réfléchissante déposée sur un substrat transparent, notamment en verre, tel que dans un transporteur acheminant le substrat transparent revêtu (6), d'un côté de ce substrat (6), est prévu un rail (10) chevauchant le substrat (6) sur lequel peut se déplacer un chariot (12) portant une tête de mesure (23) qui reçoit un signal lumineux réfléchi pour mesurer la couleur de la lumière réfléchie, **caractérisé en ce que** de l'autre côté du substrat est prévu un autre rail (11) chevauchant le substrat (6) sur lequel peut se déplacer un autre chariot (13) portant une tête de mesure (27) qui reçoit un signal lumineux réfléchi pour mesurer la couleur de la lumière réfléchie, les deux têtes de mesure (23, 27) pouvant être activées séparément ou conjointement, et les deux chariots (12, 13) portant respectivement les deux têtes de mesure pouvant être déplacés en synchronisme, **et en ce que** sur le chariot (12) portant la tête de mesure (23) tournée vers la couche est monté, avec un espace d'air (A) par rapport au substrat transparent, notamment en verre, revêtu (6) et parallèlement à celui-ci, un substrat transparent non revêtu (24) qui se trouve dans la trajectoire du rayon de mesure de la tête de mesure (23) et qui est prolongé dans une mesure suffisante en direction de l'axe optique de l'autre tête de mesure (27) pour que le rayonnement issu de cette tête de mesure (27) frappe ce substrat.

2. Dispositif selon la revendication 1, **caractérisé en ce que** les deux têtes de mesure (23, 27) sont décalées l'une de l'autre de telle sorte que les résultats des mesures ne soient pas influencés par la réflexion du rayon de mesure sur la tête de mesure respectivement opposée.

3. Dispositif selon l'une des revendications 1 à 2, **caractérisé en ce qu'**un spectromètre monté fixe à l'extérieur du transporteur est prévu pour évaluer le rayonnement réfléchi et un câble à fibres optiques flexible (28) est prévu pour acheminer la lumière réfléchie de la tête de mesure (23, 27) au spectromètre.

4. Dispositif selon l'une des revendications 1 à 3, **caractérisé en ce qu'**il est monté sur le transporteur à rouleaux installé derrière une installation de revêtement à magnétron et chargé d'acheminer le substrat transparent (6) après que celui-ci ait quitté l'installation de revêtement.

## Claims

1. Device for measuring the reflective properties of a partly reflecting film deposited on a transparent substrats, notably in glass, such that, in a conveyer conveying the coated transparent substrats (6), on one side of this substrats (6), there is provided a rail (10) straddling the substrats (6) on which there can travel a carriage (12) carrying a measuring head (23) which receives a reflected light signal for measuring the colour of the reflected light, **characterised in that** on the other side of the substrats there is provided another rail (11) straddling the substrats (6) on which there can move another carriage (13) carrying a measuring head (27) which receives a reflected light signal in order to measure the colour of the reflected light, the two measuring heads .(23, 27) being able to be activated separately or conjointly, and the two carriages (12, 13) carrying respectively the two measuring heads being able to be moved in synchronisme and **in that**, on the carriage (12) carrying the measuring head (23) turned towards the film there is mounted, with an air gap (A) with respect to the transparent substrats, notably made from coated glass (6) and parallel to the latter, a non-coated transparent substrats (24) which is situated in the path of the measuring beam of the measuring head (23) and which is extended to a sufficient extent in the direction of the optical axis of the other measuring head (27) for the radiation issuing from this measuring head (27) to strike this substrats.

2. Device according to Claim 1, **characterised in that** the two measuring heads (23, 27) are offset from each other in such a manner that the results of the measurements are not influenced by the reflection of the measuring beam from the respectively opposite measuring head.

3. Device according to one of Claims 1 to 2, **characterised in that** a spectrometer mounted fixed outside the conveyer is provided for evaluating the reflected radiation and a flexible fibre-optics cable (28) is provided for conducting the reflected light from the measuring head (23, 27) to the spectrometer.

4. Device according to one of Claims 1 to 3, **characterised in that** it is mounted on the roller conveyer installed behind a magnetron coating installation and having the function of conveying the transparent substrats (6) after the latter has left the coating installation.

## Patentansprüche

1. Vorrichtung zum Messen der Reflexionseigenschaften einer auf einem transparenten, insbesondere aus Glas bestehenden Substrat abgeschiedenen teilreflektierenden Schicht, bei dem auf einem das beschichtete transparente Substrat (6) fortbewegenden Förderer auf einer Seite dieses Substrats (6) eine dieses überspannende Schiene (10) vorgesehen ist, auf der ein Schlitten (12) verfahrbar ist, der einen Messkopf (23) trägt, der ein reflektiertes Lichtsignal zum Messen der Farbe des reflektierten Lichtes empfängt, **dadurch gekennzeichnet, dass** auf der anderen Seite des Substrats eine andere das substrat uberspannende Schiene (11) vorgesehen ist, auf der ein anderer Schlitten (13) verfahrbar ist, der einen Messkopf (27) trägt, der ein reflektiertes Lichtsignal zum Messen der Farbe des reflektierten Lichtes empfängt, wobei die beiden Messköpfe (23, 27) einzeln oder gemeinsam aktivierbar sind, und wobei die beiden Schlitten (12, 13) synchron verfahrbar sind, und dadurch, dass auf dem den der Schicht (7) zugewandten Messkopf (23) tragenden Schlitten (12) mit einem Luftabstand (A) zu dem beschichteten transparenten, insbesondere Glas-Substrat (6) und parallel zu diesem eine transparentes nicht beschichtetes Substrat (24) angeordnet ist, das sich im Laufweg des Messstrahls des Messkopfes (23) befindet und das in Richtung der optischen Achse des anderen Messkopfes (27) um ein hinreichendes Maß verlängert ist, so dass die von diesem Messkopf (27) ausgesandte Messstrahlung auf dieses Substrat auftrifft.

2. Vorrichtung nach Anspruch 1, **dadurch gekennzeichnet, dass** die beiden Messköpfe (23, 27) derart gegeneinander versetzt angeordnet sind, dass die Messergebnisse nicht durch Reflexion der Messstrahlung an dem jeweils gegenüberliegenden Messkopf beeinflußt werden.

3. Vorrichtung nach einem der Ansprüche 1 bis 2, **dadurch gekennzeichnet, dass** für die Auswertung der reflektierten Strahlung ein außerhalb des Förderers stationär angeordnetes Spektrometer vorgesehen ist, und dass zum Weiterleiten des reflektierten Lichtes von dem Messkopf (23, 27) zum Spektrometer ein flexibles Lichtleitkabel (28) vorgesehen ist.

4. Vorrichtung nach einem der Ansprüche 1 bis 3, **dadurch gekennzeichnet, dass** sie an dem hinter einer Magnetron-Beschichtungsanlage angeordneten, das transparente Substrat (6) nach dem Verlassen der Beschichtungsanlage weitertransportierenden Rollenförderer angeordnet ist.
